# FASCICULE DE BREVET EUROPEEN

(11) **EP 0 409 673 B1**
(45) Date de publication et mention de la délivrance du brevet: **02.08.1995**
(21) Numéro de dépôt: 90401616.9
(22) Date de dépôt: 12.06.1990
(51) Int. Cl.: G11B 5/245, G11B 5/48, G11B 15/12

(54) **Tête magnétique intégrée d'enregistrement**
Integrierter Magnetaufzeichnungskopf
Integrated magnetic recording head

(30) Priorité: 16.06.1989 FR 8908015
(43) Date de publication de la demande: 23.01.1991
(73) Titulaire: THOMSON-CSF, 75008 Paris (FR)
(72) Inventeur: Colineau, Joseph, F-92045 Paris La défense (FR)
(74) Mandataire: Chaverneff, Vladimir

(56) Documents cités:
- EP-A- 0 195 590
- WO-A-82/03938
- CH-A- 0 336 207
- GB-A- 0 782 572
- GB-A- 0 819 134
- JP-A-51 113 716
- US-A- 2 995 631
- US-A- 3 333 275
- US-A- 3 435 440
- US-A- 3 662 361
- US-A- 3 686 467
- US-A- 4 107 742
- US-A- 4 322 763

## Description

La présente invention se rapporte à une tête magnétique intégrée d'enregistrement.

On connaît plusieurs types de têtes magnétiques intégrées à réseau dense de micro-têtes. La plupart de ces têtes nécessitent la réalisation d'un bobinage en couches minces pour chaque micro-tête composant les têtes magnétiques, ce qui limite leur emploi à des appareils ne nécessitant qu'un petit nombre de micro-têtes. La présente invention a pour objet une tête magnétique d'enregistrement nécessitant le minimum possible de bobinages et présentant de bonnes caractéristiques d'enregistrement.

La présente invention a également pour objet une tête magnétique intégrée d'enregistrement à structure matricielle comportant le plus grand nombre possible de micro-têtes sur un substrat de dimensions réduites, sans que ses performances en soient altérées.

On connaît d'après le document US-A-4.322.763 une tête magnétique d'enregistrement-lecture dont le circuit magnétique est parcouru par un courant électrique qui en fait varier la perméabilité magnétique US-A-3 333 275 divulgue une tête magnétique d'enregistrement pour bande dont le flux magnétique est généré par un aimant permanent. Un élément ferromagnétique conducteur est prévu tel que, lorsqu'il est activé, le flux traversant l'entrefer est détourné vers l'extérieur.

La tête magnétique d'enregistrement conforme à l'invention est une tête comportant un circuit magnétique coopérant avec un premier circuit électrique produisant un flux magnétique dans ce circuit magnétique, et avec un second circuit électrique, passant par une partie de ce circuit magnétique et permettant de faire varier la réluctance de cette partie de circuit magnétique, caractérisée par le fait que le circuit magnétique comporte une première partie formant une pièce massive ayant sensiblement une forme de "U", et une deuxième partie de fermeture de flux magnétique, cette deuxième partie comprenant au moins une pièce en forme de bande, électriquement isolée de la première partie et parcourue par un courant électrique, une des pièces de la deuxième partie comportant localement une zone saturable.

L'invention est spécifiée dans les revendications 1 et 19. Ces revendications sont délimitées par rapport à US-A-4 322 763.

La présente invention sera mieux comprise à la lecture de la description détaillée de plusieurs modes de réalisation, pris comme exemples non limitatifs et illustrés par le dessin annexé, sur lequel :
- la figure 1 est une vue en coupe simplifiée d'une tête magnétique de l'art antérieur,
- la figure 2 est une vue en perspective d'une partie de matériau magnétique servant à expliquer le principe de sa modification de perméance,
- les figures 3 et 4 sont des vues en coupe simplifiées de deux modes de réalisation de têtes magnétiques conformes à l 'invention,
- les figures 5A à 5D sont des vues en coupe simplifiées de shunts magnétiques pouvant être utilisés dans la tête magnétique de l'invention,
- les figures 6A et 6B sont des schémas électriques équivalents de têtes magnétiques conformes à l'invention, et
- les figures 7 et 8 sont des vues partielles simplifiées de têtes magnétiques multipistes conformes à l'invention.

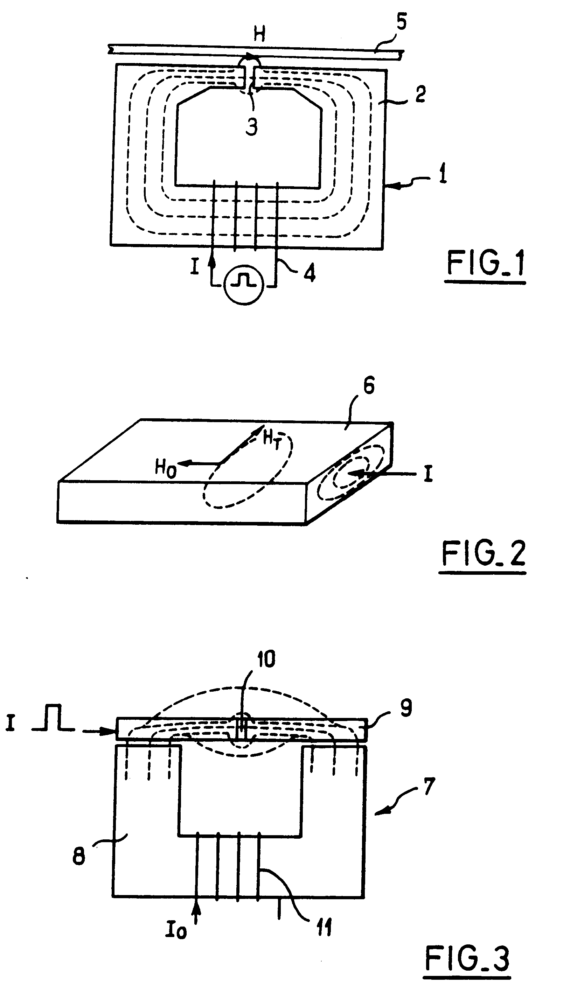

On a représenté en figure 1 une tête magnétique classique 1 dont le circuit magnétique 2 est fermé, à l'exception d'un entrefer 3. Le circuit magnétique 2 est parcouru par un flux magnétique (symbolisé par des lignes interrompues) généralement engendré par un bobinage 4.

L'entrefer 3 permet de faire sortir le flux du circuit magnétique et de créer un champ H capable de magnétiser le support d'enregistrement 5 (disque ou bande magnétique) défilant devant cet entrefer.

L'information à enregistrer est appliquée directement ou après addition à une porteuse, sous forme d'un courant traversant le bobinage 4. C'est donc le flux dans le circuit magnétique qui est modulé par l'information à enregistrer.

On fait varier le champ dans l'entrefer en modulant la perméance de l'entrefer et/ou des pôles de la tête magnétique, ou de pièces magnétigues situées à proximité des pôles. Cela permet de dissocier la production du flux magnétique et le contrôle de ce flux.

Pour modifier la perméance d'une partie 6 de circuit magnétique (figure 2), on injecte un courant électrique I directement dans le matériau constituant cette partie de circuit magnétique. Selon une variante, on injecte ce courant dans un conducteur électrique situé à proximité immédiate de ce matériau magnétique.

Le courant I crée un champ Hₒ, perpendiculaire au champ H_{T} d'excitation, suffisamment intense pour porter une partie du volume du matériau 6 à saturation. La perméabilité de cette partie de circuit magnétique devient alors nettement plus faible qu'en l'absence du courant I, et le flux magnétique circulant dans l'entrefer pratiqué dans le circuit magnétique peut alors être modulé grâce à la modulation de ce courant I.

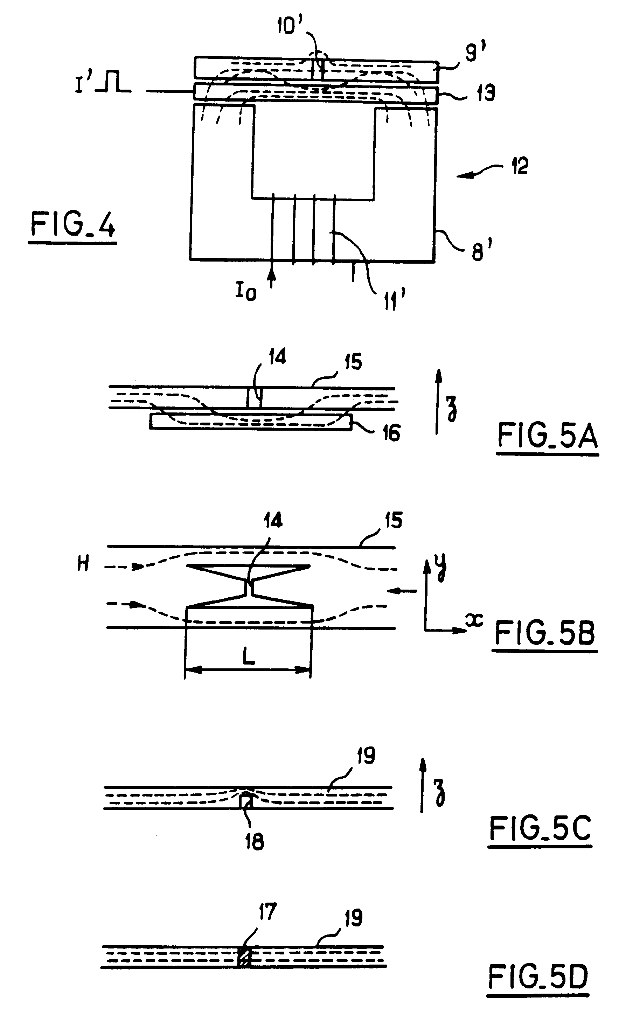

Ce procédé de contrôle du flux magnétique peut être mis en oeuvre dans une tête magnétique de deux façons, comme expliqué ci-dessous en référence aux figures 3 et 4.

La tête magnétique 7 de la figure 3 comporte un circuit magnétique massif 8, ayant sensiblement une forme en "U", et une pièce 9 de fermeture de flux ou pièce polaire, dans laquelle est pratiqué un entrefer 10. La pièce 9 est avantageusement électriquement isolée du circuit 8. Une bobine 11 enroulée sur une jambe du circuit 8 et alimentée par un courant Io produit un flux magnétique dans le circuit 8-9-10. Pour contrôler ce flux, on fait passer un courant I variable dans la pièce 9, par exemple une suite d'impulsions. Ce courant I, lorsqu'il a une valeur suffisante, provoque l'inhibition de l'écriture de la tête 7 par diminution de la perméance de la pièce 9, ce qui fait qu'il ne sort presque plus de flux d'écriture par l'entrefer 10.

La tête magnétique 12 de la figure 4 comporte un circuit magnétique massif 8′ en "U", analogue au circuit 8 de la figure 3. Ce circuit 8′ coopère avec une pièce 9′ de fermeture de flux, ou pièce polaire, similaire à la pièce 9 et pourvue d'un entrefer 10, mais une pièce 13 en matériau magnétique est interposée entre le circuit 8′ et la pièce 9' et électriquement isolée de ces deux éléments. Selon une variante, non représentée, on permute les positions des pièces 9′ et 13, ce qui fait que la pièce 9′ est interposée entre les éléments 8′ et 13. Une bobine 11′, similaire à la bobine 11 produit un flux magnétique dans le circuit magnétique 8′-9′-10′.

L'injection d'un courant variable I′ dans la pièce 13 faisant office de shunt magnétique lorsqu'elle n'est parcourue par aucun courant, en fait baisser la perméabilité magnétique, au point qu'elle n'absorbe pratiquement pas de flux magnétique circulant dans la pièce 8′. La tête magnétique 12 produit alors dans l'entrefer 10′ un flux suffisant pour permettre l'écriture sur le support magnétique passant devant l'entrefer 10′. Par conséquent, le passage du courant I′ dans la pièce 13 valide l'écriture de la tête magnétique.

Les bilans énergétiques des deux têtes des figures 3 et 4 ne sont pas équivalents :
- avec la tête de la figure 3, il faut, pour faire fonctionner un dispositif à tête unique, maintenir le courant de contrôle ou d'inhibition I pendant au moins la moitié du temps d'utilisation de la tête. Si on utilise un dispositif enregistreur comportant un réseau de telles têtes à multiplexage de leur commande, il faut fournir le courant d'inhibition avec un rapport cyclique supérieur à n-1/n, n étant le nombre de lignes de commande du dispositif multiplexé,
- au contraire, avec la tête de la figure 4, il suffit d'une impulsion de courant très brève (typiquement de l'ordre de 50ns) pour créer un champ d'écriture et enregistrer un domaine magnétique sur le support d'enregistrement. Dans le cas d'un dispositif matriciel multiplexé, il suffit de fournir le courant de validation avec un rapport cyclique proche de zéro (inférieur à 1/n, n étant comme défini ci-dessus).

L'intérêt de la tête magnétique de l'invention réside dans la possibilité de réaliser des têtes magnétiques de dimensions très réduites et de les adresser selon un processus séquentiel original. L'application préférée de la tête magnétique de l'invention est donc la réalisation de dispositifs à têtes multiples et à structure matricielle.

On va décrire ci-dessous plusieurs modes de réalisation de têtes magnétiques et en particulier de leur zone polaire, dans le cas où la validation d'écriture est obtenue par un courant de contrôle (cas de la figure 4).

Ces modes de réalisation font appel à la technique du dépôt en couches minces, en particulier pour la réalisation des pôles et de l'entrefer, réalisation connue en soi. Le shunt magnétique, en matériau électriquement conducteur, est également réalisé selon cette technique, dans le même plan que les pôles, ou dans un plan parallèle.

Les lignes de champ sont, en temps normal, canalisées par ce shunt magnétique. On peut, en choisissant convenablement les dimensions géométriques et/ou les caractéristiques des matériaux magnétiques, réduire à une valeur très faible le champ de fuite de l'entrefer.

Lorsqu'on injecte dans le shunt magnétique un courant I, qui le sature, le flux magnétique circule alors principalement dans les pôles de la tête, et un champ de fuite important règne au voisinage de l'entrefer, permettant d'enregistrer le support magnétique qui défile devant l'entrefer.

Les dimensions, la forme et les caractéristiques magnétiques du shunt magnétique doivent être choisies de manière que le rapport des champs en présence et en l'absence de courant de contrôle soit le plus élevé possible.

Il est par ailleurs avantageux de prévoir dans le circuit magnétique de la tête d'enregistrement un entrefer secondaire ou tout autre moyen d'augmenter la réluctance totale du circuit magnétique. Un tel moyen a pour rôle de rendre le flux total circulant dans le circuit magnétique relativement insensible aux variations de perméance du shunt magnétique. Cet entrefer secondaire permet en outre d'éviter la saturation du shunt magnétique en l'absence de courant de contrôle. On a représenté sur les figures 5A à 5D de tels moyens.

Le mode de réalisation des figures 5A et 5B (5A : vue en couple, 5B : vue en plan) se rapporte au cas où l'entrefer 14 pratiqué dans un pôle 35 de tête magnétique a une longueur L non négligeable par rapport à celle du shunt magnétique 16. Cet entrefer 14 a à peu près la forme d'un "papillon" dont les languettes de la partie centrale définissent entre elles l'entrefer principal. L'intérêt d'un tel mode de réalisation est d'obtenir une modulation importante de la réluctance du shunt magnétique avec un courant de contrôle assez faible. La structure de ce mode de réalisation est obtenue par dépôt de couches successives de matériaux magnétiques sur la structure du reste de la tête magnétique, ou dans le plan des pôles magnétiques de cette tête. La réalisation dans le plan des pôles permet une simplification de la technologie. En outre, les shunts magnétiques peuvent alors jouer le rôle de blindages entre micro-têtes d'une tête à réseau dense de micro-têtes.

On a représenté sur les figures 5C et 5D un shunt magnétique 17 localisé à l'intérieur de l'entrefer 18 pratiqué dans des pôles 19. Ce shunt peut également être disposé à proximité immédiate de l'entrefer. Ces structures sont les plus compactes. Elles offrent cependant moins de degrés de liberté pour l'optimisation de la tête magnétique, et nécessitent un courant de contrôle plus important pour réaliser la modulation du flux magnétique.

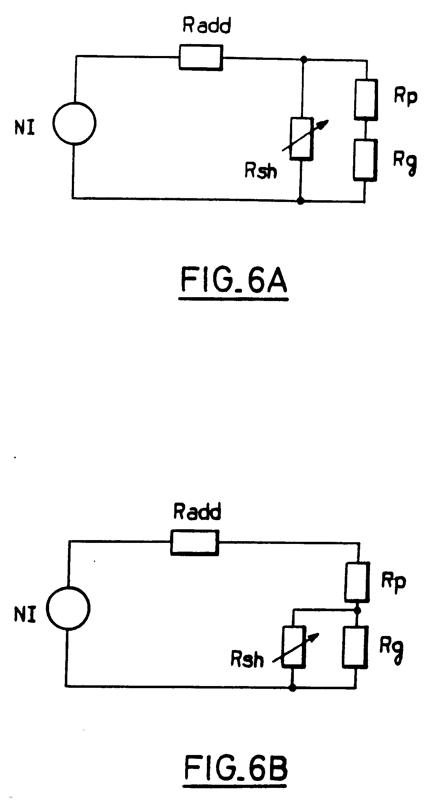

On a représenté en figures 6A et 6B des modèles à schémas électriques équivalents des modes de réalisation des figures 5A à 5D. Sur ces figures 6A et 6B, NI représente la force magnétomotrice appliquée à la tête, Rg la réluctance de l'entrefer, Rsh le shunt magnétique, Rp la réluctance des pôles magnétiques, et Radd la réluctance additionnelle réalisée par exemple à l'aide d'un entrefer secondaire.

La figure 6A se rapporte au cas où le shunt magnétique est relativement long et agit à la fois sur les pôles et l'entrefer (comme dans le cas des figures 5A et 5B), tandis que la figure 6B se rapporte au cas où le shunt magnétique est relativement petit et n'agit pratiquement que sur l'entrefer (comme en figures 5C, 5D).

Le matériau utilisé pour le shunt peut être le même que celui des pôles magnétiques. On peut alors jouer sur ses caractéristiques géométriques ou magnétiques (par exemple grâce à un traitement local du matériau, tel qu'un traitement thermique, une implantation ionique...) par exemple pour en diminuer l'aimantation à saturation ou pour conférer au matériau de ce shunt une anisotropie transversale au champ d'excitation et le rendre ainsi plus facilement saturable.

Bien entendu, le matériau du shunt magnétique peut être différent de celui des pôles magnétiques, le choix de ce matériau dépendant des caractéristiques que l'on désire en obtenir.

On vient de décrire des modes de réalisation à tête d'enregistrement simple, c'est-à-dire enregistrant une seule piste (ou un faible nombre de pistes) sur une bande magnétique, mais il est bien entendu que les caractéristiques de cette tête simple s'appliquent à une tête multiple, en particulier une tête comportant un réseau dense de micro-têtes.

Du fait que l'invention permet de séparer les fonctions de production de flux magnétique et de contrôle de ce flux, il n'y a plus besoin de munir, dans une tête multiple, chaque micro-tête d'un bobinage individuel d'excitation. On peut donc fabriquer des têtes multiples à haut degré d'intégration, en particulier en utilisant une technologie planaire, par exemple telle que celle décrite dans la Demande de Brevet français 86 14974.

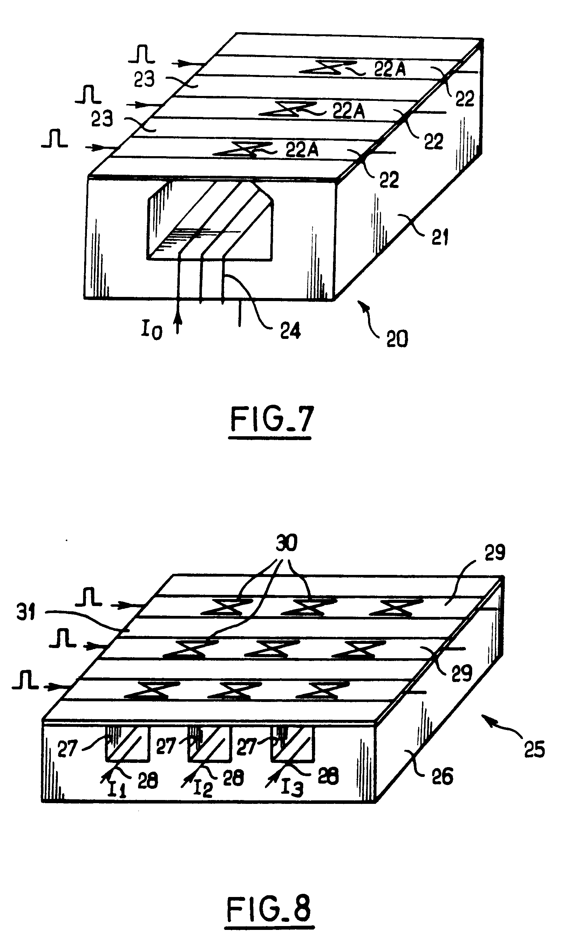

Un premier mode de réalisation de tête multiple est représenté en figure 7. La partie 20 de tête représentée concerne une partie de colonne de micro-têtes. Sur le circuit magnétique massif commun 21 en "U" sont formés des pôles 22 parallèles entre eux et similaires à celui des figures 5A, 5B et comportant des entrefers 22A déterminant chacun une micro-tête. Ces pôles 22 sont séparés par des bandes 23 en matériau électriquement isolant. Une bobine 24 magnétise le circuit 21 et produit le même flux magnétique dans tous les pôles. Des impulsions de courant de validation d'écriture sont envoyées aux différentes micro-têtes. La bobine 24 peut recevoir une excitation en courant continu ou alternatif. Si le nombre de micro-têtes est élevé (typiquement 100 à 2000), il est préférable d'utiliser un circuit de multiplexage pour diminuer le nombre de connexions de sortie.

On a représenté en figure 8, une partie de tête magnétique 25 multipiste à réseau cartésien de micro-têtes.

Pour réaliser la tête 25, on part d'un substrat magnétique, par exemple un bloc de ferrite. Dans ce bloc 26, on pratique une série de n rainures (trois seulement ont été représentées) parallèles 27 dans chacune desquelles on dépose ou on bobine des conducteurs d'excitation 28 formant des bobines de production de flux à moduler. On peut avantageusement remplir ensuite les rainures 27, munies de leurs conducteurs 28, de matériau non magnétique tel que du verre dont la surface est ensuite aplanie et même polie. Ensuite, on dépose sur le bloc 26 des bandes parallèles de pièces polaires 29 comportant chacune m entrefers 30 tels que celui des figures 5A,5B par exemple. Les bandes 29, en matériau magnétique électriquement conducteur, sont séparées par des bandes 31 en matériau électriquement isolant. Dans un exemple de réalisation, m et n sont au moins égaux à 16. On obtient ainsi une tête magnétique à structure matricielle de n lignes de m colonnes de micro-têtes magnétiques. Un ensemble de n informations élémentaires (par exemple les éléments binaires successifs d'un signal numérique) est appliqué aux n conducteurs d'excitation. La ligne de têtes qui doit être active à un moment donné reçoit alors une impulsion de commande qui permet d'inscrire les informations envoyées à la tête magnétique sur les n pistes correspondantes (la tête magnétique est positionnée par rapport à la bande magnétique qu'elle doit enregistrer de telle façon que les n micro-têtes d'une même ligne, c'est-à-dire disposées sur la même bande polaire 29, enregistrent n pistes successives de cette bande). Les informations correspondant à une seconde ligne de micro-têtes sont ensuite présentées à la tête, et cette seconde ligne reçoit à son tour une impulsion d'écriture, et ainsi de suite.

La structure d'une telle tête 25 est matricielle, ce qui permet l'intégration d'un grand nombre de micro-têtes sur un substrat de faibles dimensions, avec un nombre de connexions réduit. Le fonctionnement de cette tête peut être multiplexé, c'est-à-dire que les informations à écrire sont envoyées par groupes successifs.

## Revendications

1. Tête magnétique d'enregistrement comportant un circuit magnétique coopérant avec un premier circuit électrique produisant un flux magnétique dans ce circuit magnétique, et avec un second circuit électrique, passant par une partie de ce circuit magnétique et permettant de faire varier la réluctance de cette partie de circuit magnétique, caractérisée par le fait que le circuit magnétique comporte une première partie formant une pièce massive ayant sensiblement une forme de "U" (8, 8′, 21, 26), et une deuxième partie de fermeture de flux magnétique (9, 9′, 22, 29, 13), cette deuxième partie comprenant au moins une pièce en forme de bande, électriquement isolée de la première partie et parcourue par un courant électrique, une des pièces de la deuxième partie comportant localement une zone saturable (10, 10′, 14, 18, 22A, 30).

2. Tête magnétique selon la revendication 1, caractérisée par le fait que la deuxième partie du circuit magnétique comporte une première pièce parcourue par un courant électrique (15) et comportant localement une zone saturable (14) et une deuxième pièce (13, 16) formant shunt magnétique.

3. Tête magnétique selon la revendication 1, caractérisée par le fait que la deuxième partie du circuit magnétique comporte une première pièce (9′) comprenant localement une zone saturable (10′) et une deuxième pièce (13) formant shunt magnétique et parcourue par un courant électrique.

4. Tête magnétique selon l'une des revendications 2 ou 3, caractérisée par le fait que la première pièce de la deuxième partie du circuit magnétique est disposée entre la seconde pièce et la première partie du circuit magnétique.

5. Tête magnétique selon l'une des revendications 2 ou 3, caractérisée par le fait que la deuxième pièce de la deuxième partie du circuit magnétique est disposée entre la première pièce et la première partie du circuit magnétique.

6. Tête magnétique selon l'une des revendications 2 ou 3, caractérisée par le fait que les deux pièces de la deuxième partie du circuit magnétique sont disposées dans un même plan.

7. Tête magnétique selon la revendication 2, caractérisée par le fait que la deuxième pièce (17) est logée dans un entrefer (18) pratiqué dans la première pièce.

8. Tête magnétique selon l'une des revendications 2 à 7, caractérisée par le fait que le circuit magnétique de la tête d'enregistrement comporte un moyen augmentant la réluctance totale de son circuit magnétique.

9. Tête magnétique selon la revendication 8, caractérisée par le fait que le moyen augmentant la réluctance totale du circuit magnétique est un entrefer secondaire.

10. Tête magnétique selon l'une des revendications 2 à 9, caractérisée par le fait que le matériau de la première pièce est le même que celui de la deuxième pièce de la deuxième partie du circuit magnétique.

11. Tête magnétique selon l'une des revendications 2 à 9, caractérisée par le fait que l'on ajuste les qualités magnétiques de la pièce parcourue par un courant électrique en jouant sur sa géométrie.

12. Tête magnétique selon l'une des revendications 2 à 9, caractérisée par le fait que l'on ajuste les qualités magnétiques de la pièce parcourue par un courant électrique par un traitement local du matériau la constituant.

13. Tête magnétique selon la revendication 12, caractérisée par le fait que le traitement local est un traitement thermique.

14. Tête magnétique selon la revendication 12, caractérisée par le fait que le traitement local est réalisé par implantation ionique.

15. Tête magnétique selon l'une des revendications précédentes, caractérisée par le fait qu'au moins la pièce comportant localement une zone saturable et cette zone sont réalisées par dépôt en couches minces.

16. Tête magnétique selon l'une des revendications précédentes, caractérisée par le fait qu'elle fait partie d'une structure matricielle comportant un grand nombre de telles têtes, à disposition en lignes et colonnes.

17. Tête magnétique selon la revendication 16, caractérisée par le fait qu'elle est à commande multiplexée.

18. Tête magnétique selon la revendication 16 ou 17, caractérisée par le fait que les lignes de têtes reçoivent des signaux de commande d'écriture, et les colonnes de têtes les informations à enregistrer.

19. Dispositif enregistreur sur bande magnétique, caractérisé par le fait qu'il comporte une tête d'enregistrement selon l'une des revendications précédentes.

## Patentansprüche

1. Magnetischer Schreibkopf mit einem Magnetkreis, der mit einem ersten elektrischen Kreis, welcher einen Magnetfluß in diesem Magnetkreis erzeugt, und mit einem zweiten elektrischen Kreis zusammenwirkt, der durch einen Teil dieses Magnetkreises verläuft und den magnetischen Widerstand dieses Teils des Magnetkreises zu verändern vermag, dadurch gekennzeichnet, daß der Magnetkreis ein erstes ein massives, im wesentlichen U-förmiges Bauteil (8, 8′, 21, 26) und einen zweiten Bereich zum Schließen des Magnetflusses (9, 9′, 22, 29, 13) aufweist, wobei letzterer mindestens ein bandförmiges, elektrisch vom ersten Bauteil isoliertes Teil besitzt, das von einem elektrischen Strom durchflossen ist, und daß eines der Teile des zweiten Bereichs örtlich eine Zone (10, 10′, 14, 18, 22A, 30) aufweist, die gesättigt werden kann.

2. Magnetkopf nach Anspruch 1, dadurch gekennzeichnet, daß der zweite Bereich des Magnetkreises ein erstes Teil (15) aufweist, das von einem elektrischen Strom durchflossen ist und örtlich eine Zone (14) aufweist, die gesättigt werden kann, während ein zweites Teil (13, 16) einen magnetischen Kurzschluß bildet.

3. Magnetkopf nach Anspruch 1, dadurch gekennzeichnet, daß der zweite Bereich des Magnetkreises ein erstes Teil (9′), das örtlich eine sättigbare Zone (10′) enthält, und ein zweites, einen magnetischen Kurzschluß bildendes Teil (13) aufweist, das von einem elektrischen Strom durchflossen ist.

4. Magnetkopf nach einem der Ansprüche 2 oder 3, dadurch gekennzeichnet, daß das erste Teil des zweiten Bereich des Magnetkreises zwischen dem zweiten Teil und dem ersten Bauteil des Magnetkreises angeordnet ist.

5. Magnetkopf nach einem der Ansprüche 2 oder 3, dadurch gekennzeichnet, daß das zweite Teil des zweiten Bereich des Magnetkreises zwischen dem ersten Teil und dem ersten Bauteil des Magnetkreises angeordnet ist.

6. Magnetkopf nach einem der Ansprüche 2 oder 3, dadurch gekennzeichnet, daß die beiden Teile des zweiten Bereichs des Magnetkreises in einer gemeinsamen Ebene liegen.

7. Magnetkopf nach Anspruch 2, dadurch gekennzeichnet, daß das zweite Teil (17) in einem im ersten Teil ausgebildeten Magnetspalt (18) untergebracht ist.

8. Magnetkopf nach einem der Ansprüche 2 bis 7, dadurch gekennzeichnet, daß der Magnetkreis des Schreibkopfs ein Mittel aufweist, um den magnetischen Gesamtwiderstand des Magnetkreises zu erhöhen.

9. Magnetkopf nach Anspruch 8, dadurch gekennzeichnet, daß das Mittel zur Erhöhung des magnetischen Gesamtwiderstands des Magnetkreises ein sekundärer Magnetspalt ist.

10. Magnetkopf nach einem der Ansprüche 2 bis 9, dadurch gekennzeichnet, daß das Material des ersten Teils dem des zweiten Teils im zweiten Bereich des Magnetkreises gleicht.

11. Magnetkopf nach einem der Ansprüche 2 bis 9, dadurch gekennzeichnet, daß die magnetischen Eigenschaften des von einem elektrischen Strom durchflossenen Teils durch Beeinflussung seiner Geometrie abgestimmt werden.

12. Magnetkopf nach einem der Ansprüche 2 bis 9, dadurch gekennzeichnet, daß die magnetischen Eigenschaften des von einem elektrischen Strom durchflossenen Teils durch eine örtliche Bearbeitung des Materials dieses Teils abgestimmt werden.

13. Magnetkopf nach Anspruch 12, dadurch gekennzeichnet, daß die örtliche Bearbeitung eine thermische Bearbeitung ist.

14. Magnetkopf nach Anspruch 12, dadurch gekennzeichnet, daß die örtliche Bearbeitung durch Ionenimplantierung erfolgt.

15. Magnetkopf nach einem der vorhergehenden Ansprüche, dadurch gekennzeichnet, daß mindestens das Teil, das eine örtlich sättigbare Zone besitzt, und diese Zone durch Aufbringen dünner Schichten hergestellt sind.

16. Magnetkopf nach einem der vorhergehenden Ansprüche, dadurch gekennzeichnet, daß er zu einer Matrixstruktur mit einer großen Anzahl solcher Köpfe gehört, die in Zeilen und Spalten angeordnet sind.

17. Magnetkopf nach Anspruch 16, dadurch gekennzeichnet, daß er eine Multiplexsteuerung aufweist.

18. Magnetkopf nach einem der Ansprüche 16 oder 17, dadurch gekennzeichnet, daß die Zeilen von Köpfen Schreibsteuersignale und die Spalten von Köpfen die einzuschreibenden Informationen zugeführt erhalten.

19. Vorrichtung zum Aufzeichnen auf einem Magnetband, dadurch gekennzeichnet, daß sie einen Schreibkopf nach einem der vorhergehenden Ansprüche enthält.

## Claims

1. Magnetic recording head including a magnetic circuit interacting with a first electrical circuit producing a magnetic flux in this magnetic circuit, and with a second electrical circuit, passing through a part of this magnetic circuit and making it possible to make the reluctance of this magnetic circuit part vary, characterized in that the magnetic circuit includes a first part forming a solid piece having substantially a "U" shape (8, 8′, 21, 26), and a second magnetic flux-closing part (9, 9′, 22, 29, 13), this second part comprising at least one strip-shaped piece, electrically insulated from the first part and carrying an electric current, one of the pieces of the second part locally including a saturable region (10, 10′, 14, 18, 22A, 30).

2. Magnetic head according to Claim 1, characterized in that the second part of the magnetic circuit includes a first piece carrying an electric current (15) and locally including a saturable region (14) and a second piece (13, 16) forming a magnetic shunt.

3. Magnetic head according to Claim 1, characterized in that the second part of the magnetic circuit includes a first piece (9′) locally comprising a saturable region (10′) and a second piece (13) forming a magnetic shunt and carrying an electric current.

4. Magnetic head according to one of Claims 2 or 3, characterized in that the first piece of the second part of the magnetic circuit is arranged between the second piece and the first part of the magnetic circuit.

5. Magnetic head according to one of Claims 2 or 3, characterized in that the second piece of the second part of the magnetic circuit is arranged between the first piece and the first part of the magnetic circuit.

6. Magnetic head according to one of Claims 2 or 3, characterized in that the two pieces of the second part of the magnetic circuit are arranged in the same plane.

7. Magnetic head according to Claim 2, characterized in that the second piece (17) is housed in a gap (18) formed in the first piece.

8. Magnetic head according to one of Claims 2 to 7, characterized in that the magnetic circuit of the recording head includes a means increasing the total reluctance of its magnetic circuit.

9. Magnetic head according to Claim 8, characterized in that the means increasing the total reluctance of the magnetic circuit is a secondary gap.

10. Magnetic head according to one of Claims 2 to 9, characterized in that the material of the first piece is the same as that of the second piece of the second part of the magnetic circuit.

11. Magnetic head according to one of Claims 2 to 9, characterized in that the magnetic qualities of the piece carrying an electric current are adjusted by acting on its geometry.

12. Magnetic head according to one of Claims 2 to 9, characterized in that the magnetic qualities of the piece carrying an electric current are adjusted by a local treatment of the material constituting it.

13. Magnetic head according to Claim 12, characterized in that the local treatment is a heat treatment.

14. Magnetic head according to Claim 12, characterized in that the local treatment is carried out by ion implantation.

15. Magnetic head according to one of the preceding claims, characterized in that at least the piece locally including a saturable region and this region are produced by thin-film deposition.

16. Magnetic head according to one of the preceding claims, characterized in that it forms part of a matrix structure including a large number of such heads, with a row and column arrangement.

17. Magnetic head according to Claim 16, characterized in that it is a head with multiplexed control.

18. Magnetic head according to Claim 16 or 17, characterized in that the rows of heads receive write control signals, and the columns of heads receive the information to be recorded.

19. Device for recording on a magnetic tape, characterized in that it includes a recording head according to one of the preceding claims.
